# EUROPEAN PATENT APPLICATION

(11) **EP 2 218 889 A2**
(43) Date of publication of application: **18.08.2010**
(21) Application number: 10153252.1
(22) Date of filing: 11.02.2010
(51) Int. Cl.: F02C 3/28, F02C 6/18, F02C 7/08, F02C 7/224

(54) **Gas turbine plant with preheated combustion air and corresponding operating method**

(30) Priority: 16.02.2009 US 371883
(71) Applicant: General Electric Company, Schenectady, NY 12345 (US)
(72) Inventor: Gopalkrishna, Vinod Kumar Baikampady, 560066, Karnataka (IN); Basha, Aslam, 560005, Bangalore, Karnataka (IN); Lokanath, Shivaprasad, 575014, Mangalore, Karnataka (IN); Saha, Rajarshi, 560066, Bangalore, Karnataka (IN); Mazumder, Indrajit, 560066, Bangalore, Karnataka (IN)
(74) Representative: Gray, Thomas

(57) **Abstract**

A gas turbine engine plant includes an air heating system (68). The air heating system (68) is configured to heat air (72) with waste heat generated by a waste heat source (22,32,124,126,138) external to a turbine engine (12). The air heating system (68) is also configured to deliver the heated air (72) to a compressor (20) of the turbine engine (12).

## Description

### BACKGROUND OF THE INVENTION

The subject matter disclosed herein relates to the regulation of gas turbine inlet air temperatures and, more specifically, to the pre-heating of gas turbine inlet air using an external fired heater, resulting in a substantial reduction or elimination of overboard bleeding while operating the gas turbine at cold ambient conditions or at ambient temperatures lower than the ISO (International Organization for Standardization) standard day temperature.

In certain applications, gas turbine pressure ratios may reach a limit for a compressor of the gas turbine. For instance, in applications where low-BTU (British thermal units) fuels are used as fuel sources in a combustion chamber of the gas turbine, or in locations characterized by lower ambient temperatures, the pressure ratio of the compressor may become lower than the pressure ratio of a turbine of the gas turbine. In order to provide compressor pressure ratio protection (e.g., reduce the possibility of stalling the compressor), air discharged from the compressor may be bled off as overboard bleed air. However, bleeding compressed air discharged from the compressor may decrease net efficiency, since the energy expended to raise the pressure of the air within the compressor is not recovered.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a turbine engine. The system also includes an air heating system coupled to an air inlet of the turbine engine. The air heating system is configured to heat air delivered to the air inlet with waste heat generated by a waste heat source external to the turbine engine.

In a second embodiment, a system includes an air heating system. The air heating system is configured to heat air with waste heat generated by a waste heat source external to a turbine engine. The air heating system is also configured to deliver the heated air to a compressor of the turbine engine.

In a third embodiment, a method includes heating air with waste heat generated by a waste heat source external to a turbine engine. The method also includes delivering the heated air to a compressor of the turbine engine.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic flow diagram of an embodiment of a combined cycle power generation system having a gas turbine, a steam turbine, a heat recovery steam generation (HRSG) system, a fuel gas system, and an air heating system;
FIG. 2 is a process flow diagram of an embodiment of a steel mill which may generate fuel gas sources for use within the fuel gas system;
FIG. 3 is a schematic flow diagram of an embodiment of the fuel gas system of FIG. 1;
FIG. 4 is schematic flow diagram of an embodiment of the gas turbine, the HRSG system, and the fuel gas system of the combined cycle power generation system of FIG. 1, illustrating routing of the fuel gas into the combustion chamber of the gas turbine;
FIG. 5 is a schematic flow diagram of an embodiment of the gas turbine, the HRSG system, the fuel gas system, and the air heating system, illustrating use of an external fired heater and an associated air pre-heater as an external source of waste heat for increasing the temperature of the inlet air into the compressor of the gas turbine; and
FIG. 6 is a schematic flow diagram of an embodiment of the gas turbine, the HRSG system, the fuel gas system, and the air heating system, illustrating use of multiple external waste heat sources for increasing the temperature of the inlet air into the compressor of the gas turbine.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The disclosed embodiments include systems and methods to heat inlet air into a compressor of a gas turbine with waste heat generated by sources external to the gas turbine. For instance, in certain embodiments, waste heat from a fired heater fueled with a gas mixture of blast furnace gas and coke oven gas may be used to heat the inlet air into the compressor of the gas turbine. However, as described in greater detail below, waste heat from various external sources may be used to heat the inlet air. Indeed, in certain embodiments, waste heat from multiple external sources may be used to heat the inlet air. Therefore, an aspect of the systems and methods presented herein is to pre-heat gas turbine compressor inlet air. By doing so, overboard bleed flow of the gas turbine may be minimized while maintaining pressure ratio limits and desired combustion chamber exit temperature limits of the gas turbine. By reducing the overboard bleed flow, the overall performance of the gas turbine and, moreover, the combined cycle power generation system within which the gas turbine may operate, may be increased. This may be particularly so while operating the gas turbine at ambient temperatures lower than the ISO standard day temperature.

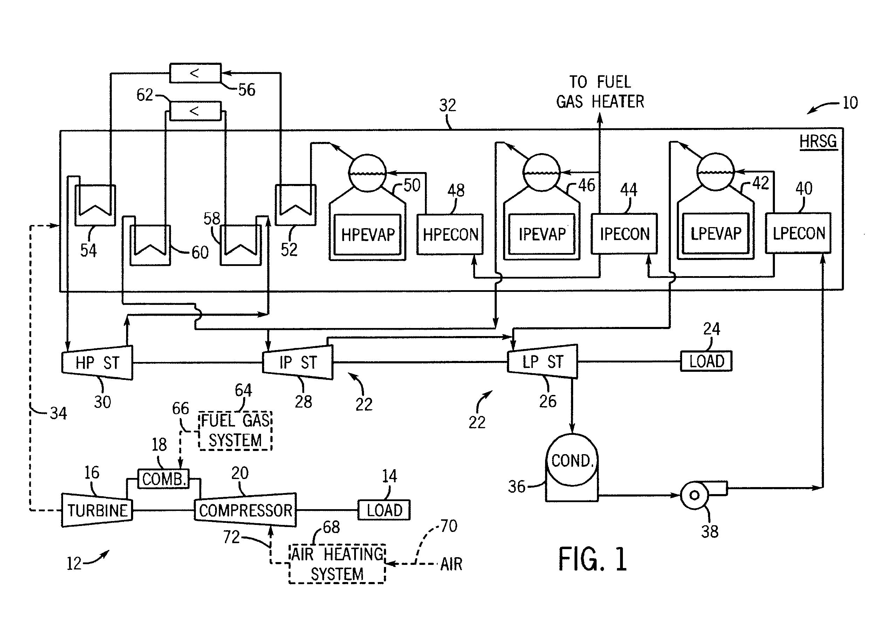

FIG. 1 is a schematic flow diagram of an embodiment of a combined cycle power generation system 10 having a gas turbine, a steam turbine, a heat recovery steam generation (HRSG) system, a fuel gas system, and an air heating system. As described in greater detail below, the fuel gas system may be configured to deliver fuel gas to the gas turbine by blending multiple by-product gases, e.g., blast furnace gas and coke oven gas from a steel mill. In addition, as also described in greater detail below, the air heating system may use external waste heat sources to heat ambient inlet air, which may be delivered to the gas turbine.

The system 10 may include a gas turbine 12 for driving a first load 14. The first load 14 may, for instance, be an electrical generator for producing electrical power. The gas turbine 12 may include a turbine 16, a combustor or combustion chamber 18, and a compressor 20. The system 10 may also include a steam turbine 22 for driving a second load 24. The second load 24 may also be an electrical generator for generating electrical power. However, both the first and second loads 14, 24 may be other types of loads capable of being driven by the gas turbine 12 and steam turbine 22. In addition, although the gas turbine 12 and steam turbine 22 may drive separate loads 14 and 24, as shown in the illustrated embodiment, the gas turbine 12 and steam turbine 22 may also be utilized in tandem to drive a single load via a single shaft. In the illustrated embodiment, the steam turbine 22 may include one low-pressure section 26 (LP ST), one intermediate-pressure section 28 (IP ST), and one high-pressure section 30 (HP ST). However, the specific configuration of the steam turbine 22, as well as the gas turbine 12, may be implementation-specific and may include any combination of sections.

The system 10 may also include a multi-stage HRSG 32. The components of the HRSG 32 in the illustrated embodiment are a simplified depiction of the HRSG 32 and are not intended to be limiting. Rather, the illustrated HRSG 32 is shown to convey the general operation of such HRSG systems. Heated exhaust gas 34 from the gas turbine 12 may be transported into the HRSG 32 and used to heat steam used to power the steam turbine 22. Exhaust from the low-pressure section 26 of the steam turbine 22 may be directed into a condenser 36. Condensate from the condenser 36 may, in turn, be directed into a low-pressure section of the HRSG 32 with the aid of a condensate pump 38.

The condensate may then flow through a low-pressure economizer 40 (LPECON), a device configured to heat feedwater with gases, which may be used to heat the condensate. From the low-pressure economizer 40, a portion of the condensate may be directed into a low-pressure evaporator 42 (LPEVAP) while the rest may be pumped toward an intermediate-pressure economizer 44 (IPECON). Steam from the low-pressure evaporator 42 may be returned to the low-pressure section 26 of the steam turbine 22. Likewise, from the intermediate-pressure economizer 44, a portion of the condensate may be directed into an intermediate-pressure evaporator 46 (IPEVAP) while the rest may be pumped toward a high-pressure economizer 48 (HPECON). In addition, steam from the intermediate-pressure economizer 44 may be sent to a fuel gas heater (not shown) where the steam may be used to heat fuel gas for use in the combustion chamber 18 of the gas turbine 12. Steam from the intermediate-pressure evaporator 46 may be sent to the intermediate-pressure section 28 of the steam turbine 22. Again, the connections between the economizers, evaporators, and the steam turbine 22 may vary across implementations as the illustrated embodiment is merely illustrative of the general operation of an HRSG system that may employ unique aspects of the present embodiments.

Finally, condensate from the high-pressure economizer 48 may be directed into a high-pressure evaporator 50 (HPEVAP). Steam exiting the high-pressure evaporator 50 may be directed into a primary high-pressure superheater 52 and a finishing high-pressure superheater 54, where the steam is superheated and eventually sent to the high-pressure section 30 of the steam turbine 22. Exhaust from the high-pressure section 30 of the steam turbine 22 may, in turn, be directed into the intermediate-pressure section 28 of the steam turbine 22. Exhaust from the intermediate-pressure section 28 of the steam turbine 22 may be directed into the low-pressure section 26 of the steam turbine 22.

An inter-stage attemperator 56 may be located in between the primary high-pressure superheater 52 and the finishing high-pressure superheater 54. The inter-stage attemperator 56 may allow for more robust control of the exhaust temperature of steam from the finishing high-pressure superheater 54. Specifically, the inter-stage attemperator 56 may be configured to control the temperature of steam exiting the finishing high-pressure superheater 54 by injecting cooler feedwater spray into the superheated steam upstream of the finishing high-pressure superheater 54 whenever the exhaust temperature of the steam exiting the finishing high-pressure superheater 54 exceeds a predetermined value.

In addition, exhaust from the high-pressure section 30 of the steam turbine 22 may be directed into a primary re-heater 58 and a secondary re-heater 60 where it may be reheated before being directed into the intermediate-pressure section 28 of the steam turbine 22. The primary re-heater 58 and secondary re-heater 60 may also be associated with an inter-stage attemperator 62 for controlling the exhaust steam temperature from the re-heaters. Specifically, the inter-stage attemperator 62 may be configured to control the temperature of steam exiting the secondary re-heater 60 by injecting cooler feedwater spray into the superheated steam upstream of the secondary re-heater 60 whenever the exhaust temperature of the steam exiting the secondary re-heater 60 exceeds a predetermined value.

In combined cycle systems such as system 10, hot exhaust gas 34 may flow from the gas turbine 12 and pass through the HRSG 32 and may be used to generate high-pressure, high-temperature steam. The steam produced by the HRSG 32 may then be passed through the steam turbine 22 for power generation. In addition, the produced steam may also be supplied to any other processes where superheated steam may be used. The gas turbine 12 cycle is often referred to as the "topping cycle," whereas the steam turbine 22 generation cycle is often referred to as the "bottoming cycle." By combining these two cycles as illustrated in FIG. 1, the combined cycle power generation system 10 may lead to greater efficiencies in both cycles. In particular, exhaust heat from the topping cycle may be captured and used to generate steam for use in the bottoming cycle.

The gas turbine 12 may be operated using fuel from a fuel gas system 64. In particular, the fuel gas system 64 may supply the gas turbine 12 with fuel gas 66, which may be burned within the combustion chamber 18 of the gas turbine 12. In addition, as described in greater detail below, an air heating system 68 may be used to increase the temperature of ambient inlet air 70, which may be at a temperature lower than the ISO standard day temperature, to create heated inlet air 72, which may be compressed within the compressor 20 of the gas turbine 12.

Although natural gas may be a preferred fuel gas for use within the combustion chamber 18 of the gas turbine 12, any suitable fuel gas 66 may be used. The fuel gas system 64 may generate fuel gas 66 for use within the gas turbine 12 in various ways. In certain embodiments, the fuel gas system 64 may generate fuel gas 66 from other hydrocarbon resources. For example, the fuel gas system 64 may include a coal gasification process, wherein a gasifier breaks down coal chemically due to interaction with steam and the high pressure and temperature within the gasifier. From this process, the gasifier may produce a fuel gas 66 of primarily CO and H₂. This fuel gas 66 is often referred to as "syngas" and may be burned, much like natural gas, within the combustion chamber 18 of the gas turbine 12.

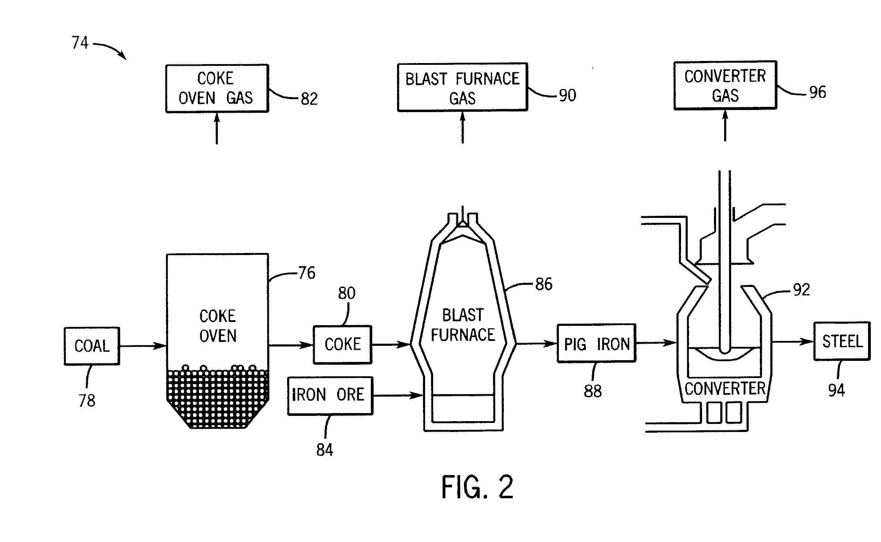

However, in other embodiments, the fuel gas system 64 may receive and further process fuel gas sources from other processes to generate the fuel gas 66 used by the gas turbine 12. For example, in certain embodiments, the fuel gas system 64 may receive fuel gas sources generated by a steel mill. FIG. 2 is a process flow diagram of an embodiment of a steel mill 74 which may generate fuel gas sources for use within the fuel gas system 64. Steel production processes of the steel mill 74 typically generate large volumes of specialty gases as by-products.

For instance, as illustrated in FIG. 2, there are three main process stages in the production of steel, all of which generate gases. In particular, a coke oven 76 may receive coal 78, such as pit coal, and produce coke 80 using dry distillation of the coal 78 in the absence of oxygen. Coke oven gas 82 may also be generated as a by-product of the process for producing coke 80 within the coke oven 76. Next, the coke 80 produced by the coke oven 76, as well as iron ore 84, may be directed into a blast furnace 86. Pig iron 88 may be produced within the blast furnace 86. In addition, blast furnace gas 90 may be generated as a by-product of the blast furnace 86. The pig iron 88 produced by the blast furnace 86 may then be directed into a converter 92, within which the pig iron 88 may be refined into steel 94 with oxygen and air. In addition, converter gas 96 may be generated as a by-product of the process for producing steel 94 within the converter 92.

Therefore, the steel mill 74 may generate three separate by-product gases, e.g., the coke oven gas 82, the blast furnace gas 90, and the converter gas 96, all of which may be characterized by different chemical compositions and properties. For example, the coke oven gas 82 may generally be comprised of approximately 50-70% hydrogen (H₂) and 25-30% methane (CH₄) and may have a lower heating value (LHV) of approximately 4,250 kcal/Nm³. Conversely, the blast furnace gas 90 may generally be comprised of approximately 5% hydrogen and 20% carbon monoxide (CO) and may have an LHV of only approximately 700 kcal/Nm³. In addition, the converter gas 96 may generally be comprised of approximately 60+% carbon monoxide and may have an LHV of approximately 2,500 kcal/Nm³. As such, the blast furnace gas 90 may have a considerably lower LHV than both the coke oven gas 82 and the converter gas 96. However, the fuel gas system 64 may blend the blast furnace gas 90 with the coke oven gas 82 to generate a fuel gas 66 meeting minimum and maximum acceptable LHV thresholds for the gas turbine 12.

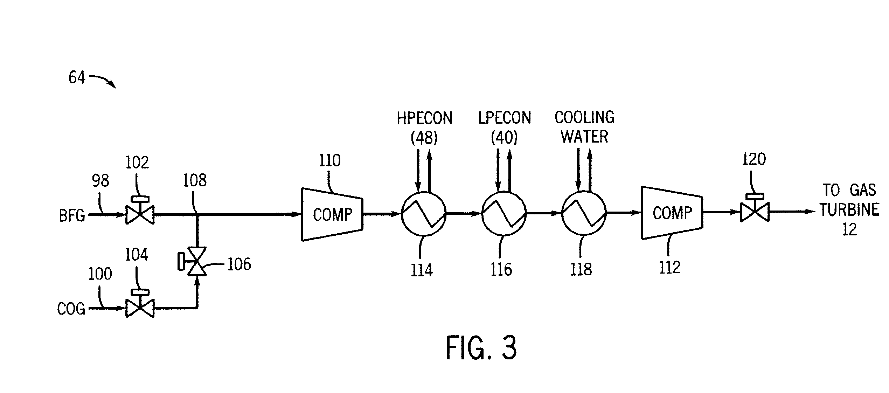

FIG. 3 is a schematic flow diagram of an embodiment of the fuel gas system 64 of FIG. 1. Blast furnace gas (BFG) 90 and coke oven gas (COG) 82 may be received into the fuel gas system 64 through separate feed lines, e.g., a BFG feed line 98 and a COG feed line 100, respectively. A BFG isolation valve 102 may be used to control the flow of blast furnace gas 90 into the BFG feed line 98 and a COG isolation valve 104 may be used to control the flow of coke oven gas 82 into the COG feed line 100. More specifically, the BFG isolation valve 102 and the COG isolation valve 104 may be used to adjust the flow of the fuel gas 66 to the gas turbine 12 between "on" and "off" positions.

The fuel gas system 64 may also include a COG flow control valve 106 in the COG feed line 100 upstream of a BFG-COG mixing point 108. The COG flow control valve 106 may function as a flow regulator and may control and meter the coke oven gas 82 to ensure that the LHV of the fuel gas 66 used in the gas turbine 12 is within acceptable limits during all operating conditions. In particular, the COG flow control valve 106 may control and meter the high-BTU coke oven gas 82 to blend with the low-BTU blast furnace gas 90 to raise the LHV of the fuel gas 66 mixture within gas turbine 12 operating limits.

As described above with respect to FIG. 2, the production of steel results in the generation of large quantities of low-BTU blast furnace gas 90. For instance, the blast furnace gas 90 may have an LHV of approximately 700 kcal/Nm³ and may be available at pressures slightly above atmospheric pressure. The coke oven gas 82, another by-product gas of the steel mill 74 which is produced in smaller quantities, may be blended with the low-BTU blast furnace gas 90 to increase the heating value of the fuel gas 66 mixture to approximately 1,050 kcal/Nm³ or another minimum acceptable LHV needed for the gas turbine 12. For instance, the blast furnace gas 90 and the coke oven gas 82 may be blended with each other such that the mass flow rates are on the order of approximately 250 and 10 pounds per second (pps), respectively. However, the coke oven gas 82 may contain large amounts of tars and particulates. As such, the fuel gas system 64 may also, in certain embodiments, be configured to remove tar, dust, and particulates from the fuel gas 66 prior to compression of the fuel gas 66 and delivery to the gas turbine 12.

After being cleaned and blended in the fuel gas system 64, the low pressure of the fuel gas 66 mixture may be boosted before the fuel gas 66 is injected into the combustion chamber 18 of the gas turbine 12. As illustrated, the fuel gas system 64 may include two or more stages, e.g., a first compressor 110 and a second compressor 112. The first and second compressors 110, 112 may, for instance, be centrifugal compressors and may be designed such that the discharge pressure of the fuel gas 66 from the second compressor 112 is sufficient to satisfy fuel pressure requirements of the gas turbine 12. In certain embodiments, each compressor may be associated with a respective surge control valve and re-circulation line for re-circulating a minimum volumetric flow for surge protection during part-load (i.e., lower than normal flow rate) operation of the respective compressor 110, 112.

In addition, as illustrated, the fuel gas system 64 may include a series of heat exchangers or coolers, e.g., a high-pressure intercooler 114, a low-pressure intercooler 116, and a trim cooler 118. In certain embodiments, these three coolers 114, 116, 118 may be located downstream of the first compressor 110 but upstream of the second compressor 112. The coolers 114, 116, 118 may be used to ensure that the temperature of the fuel gas 66 into the second compressor 112 remains below a predetermined temperature level. For instance, the fuel gas 66 into the second compressor 112 may be held below 104° F.

The high-pressure intercooler 114 and the low-pressure intercooler 116 may be sized to meet optimum performance at ambient conditions. In addition, the high-pressure intercooler 114 and the low-pressure intercooler 116 may be integrated with other components of the combined cycle power generation system 10 for performance gains. In particular, the inlet coolant source for the high-pressure intercooler 114 may be water from a high-pressure feedwater pump of the HRSG 32 and the outlet water may be directed into the high-pressure economizer 48 of the HRSG 32. In addition, the inlet coolant source for the low-pressure intercooler 116 may be water condensate from the condensate pump 38 and the outlet water may be recycled back into the low-pressure economizer 40 of the HRSG 32.

The trim cooler 118 may be sized for both combined and simple cycle operation. The trim cooler 118 may utilize cooling water from a cooling water circuit or another coolant in a cooled circuit. The water outlet may discharge into a heat rejection system. During simple cycle operation when the high-pressure intercooler 114 and the low-pressure intercooler 116 are not in operation, the trim cooler 118 may be designed to perform maximum heat exchange to cool the fuel gas 66 from, for instance, approximately 450° F from the discharge of the first compressor 110 to approximately 104° F at the inlet of the second compressor 112. However, these maximum and minimum temperatures are merely illustrative and may vary greatly depending on application-specific operating conditions. During combined cycle operation at normal conditions, all three coolers 114, 116, and 118 may be in operation.

To stay within the mechanical limitations of the compressors 110, 112, the maximum exit temperature of the compressors 110, 112 may be maintained below a predetermined temperature level (e.g., 400° F, 425° F, 450° F, 475° F, 500° F, and so forth). Since inlet temperature is expected to vary with ambient conditions, a cold side flow control valve of the trim cooler 118 may be responsible for controlling the exit temperature of the trim cooler 118 to a maximum temperature level (e.g., 80° F, 100° F, 120° F, 140° F, 160° F, and so forth). Also, in certain embodiments, each compressor may be associated with a separator, which may be used to remove condensed water from the fuel gas 66 which may be introduced into the fuel gas 66 due to the temperature drop across the high-pressure intercooler 114, the low-pressure intercooler 116, and the trim cooler 118.

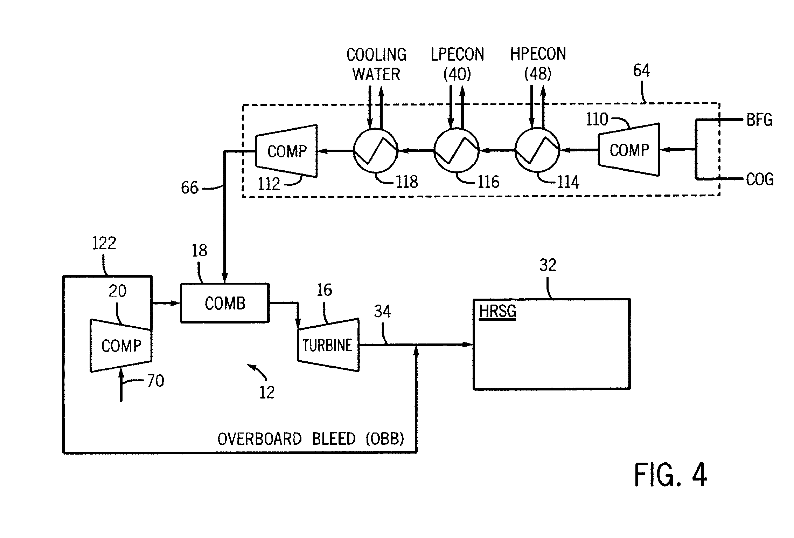

The fuel gas system 64 may also include a safety shut off valve (SSOV) 120 for emergency shutoff of the fuel gas 66 into the gas turbine 12. After the pressure of the fuel gas 66 has been boosted in the fuel gas system 64, the fuel gas 66 may be directed into the combustion chamber 18 of the gas turbine 12 through a series of interconnected piping, manifolds, and purge systems (not shown). FIG. 4 is schematic flow diagram of an embodiment of the gas turbine 12, the HRSG 32, and the fuel gas system 64 of the combined cycle power generation system 10 of FIG. 1, illustrating routing of the fuel gas 66 into the combustion chamber 18 of the gas turbine 12. At colder ambient temperatures, the compressor 20 of the gas turbine 12 may receive and compress ambient inlet air 70, which may be at a temperature lower than the ISO standard day temperature of 59° F. The compressor 20 may direct the compressed air into the combustion chamber 18 of the gas turbine 12. The fuel source 66 may be mixed with the compressed air received from the compressor 20 and burned within the combustion chamber 18. The hot gases from the combustion chamber 18 may then be directed into the turbine 16 of the gas turbine 12. The pressure/flow of the hot gases drives blades in the turbine 16 to rotate a shaft, which in turn drives the load 14.

In certain applications, the gas turbine 12 pressure ratio may approach a limit for the compressor 20. For instance, in applications where low-BTU fuels are used as fuel sources in the combustion chamber 18, or in locations characterized by lower ambient temperatures, the compressor 20 pressure ratio (e.g., the ratio of the air pressure exiting the compressor 20 to the air pressure entering the compressor 20) may become lower than the turbine 16 pressure ratio (e.g., the ratio of the hot gas pressure exiting the turbine 16 to the hot gas pressure entering the turbine 16). In order to provide compressor 20 pressure ratio protection (e.g., reduce the possibility of stalling the compressor 20), air discharged from the compressor 20 may be bled off via an overboard bleed air 122 line.

The amount of air bled from the compressor 20 may be a function of ambient conditions and the gas turbine 12 output. More specifically, the amount of air bled may increase with lower ambient temperatures and lower gas turbine 12 loads. In addition, as described above, in gas turbine 12 applications utilizing low-BTU fuel gas 66, the flow rate of the fuel gas 66 will generally be much higher than in comparable natural gas fuel applications. This is primarily due to the fact that more low-BTU fuel must be used in order to attain comparable heating or a desired firing temperature. As such, additional backpressure may be exerted on the compressor 20. In these applications, the air discharged from the compressor 20 may also be bled to reduce the backpressure and improve the stall margin (e.g., margin of design error for preventing stalling) of the compressor 20.

However, bleeding compressed air discharged from the compressor 20 may decrease the net efficiency of the combined cycle power generation system 10, because the energy expended to raise the pressure of the inlet air 70 within the compressor 20 is not recovered by the combustion chamber 18 and turbine 16 of the gas turbine 12. However, the energy introduced into the overboard bleed air 122 discharged from the compressor 20 need not be wasted. Rather, the energy in the overboard bleed air 122 may be recaptured.

One technique for recapturing the energy in the overboard bleed air 122 may be to introduce the overboard bleed air 122 into the flow of heated exhaust gas 34 from the turbine 16 of the gas turbine 12. By combining the overboard bleed air 122 with the heated exhaust gas 34 from the gas turbine 12, the heat energy in the overboard bleed air 122 may be recaptured within the HRSG 32. Specifically, the energy within the overboard bleed air 122 may be used to help generate steam for use in the steam turbine 22 via the high-pressure economizer 48, high-pressure evaporator 50, primary high-pressure superheater 52 (PHPSH), finishing high-pressure superheater 54 (FHPSH), and the other heat transfer components of the HRSG 32, described above in greater detail with respect to FIG. 1. Therefore, this technique has an advantage over simply venting the overboard bleed air 122 into the atmosphere, because the heat and mass flow of the overboard bleed air 122 may be used to recover additional energy within the bottoming cycle of the combined cycle power generation system 10.

One technique for reducing the overboard bleed air 122 flow requirements during cold ambient conditions may be to increase the temperature of the inlet air 70 to a certain optimum value upstream of the compressor 20 of the gas turbine 12. For instance, the temperature of the inlet air 70 on an ISO standard day is 59° F. Under these standard conditions, for instance, as much as 50 pounds per second (pps) of overboard bleed air 122 may be bled off of approximately 890 pps of inlet air 70. During colder ambient conditions, the amount of air bled off from an exit of the compressor 20 may be much more. However, increasing the temperature of the inlet air 70 during cold ambient conditions by, for example, 10° F may substantially reduce the overboard bleed air 122. These mass flow rates and temperatures are merely intended to be exemplary of the overboard bleed air 122 flow requirements and are not intended to be limiting.

Indeed, the actual overboard bleed air 122 flow and temperatures may vary between implementations.

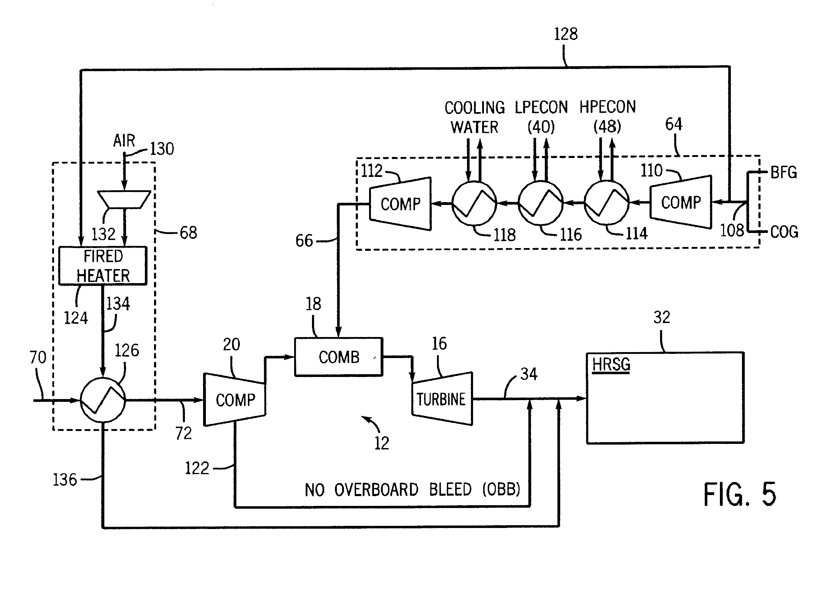

In certain embodiments, the temperature of the inlet air 70 into the compressor 20 of the gas turbine 12 operating at colder ambient conditions may be increased by utilizing waste heat from sources external to the gas turbine 12. For example, FIG. 5 is a schematic flow diagram of an embodiment of the gas turbine 12, the HRSG 32, the fuel gas system 64, and the air heating system 68, illustrating use of an external fired heater 124 and an associated air pre-heater 126 as an external source of waste heat for increasing the temperature of the inlet air 70 into the compressor 20 of the gas turbine 12. As illustrated, a portion 128 of the fuel gas 66 mixture (e.g., the blast furnace gas 90 and coke oven gas 82) may be diverted from the fuel gas system 64 downstream of the mixing point 108 but upstream of the first compressor 110 of the fuel gas system 64. In particular, as described above, under normal conditions, approximately 250 pps of blast furnace gas 90 may be mixed with approximately 10 pps of coke oven gas 82. Of this mixture of 260 pps, approximately 1.5 pps of the fuel gas 66 mixture may be diverted. In addition, in certain embodiments, only the blast furnace gas 90 may be diverted toward the fired heater 124. This may prove beneficial since, as described above, the blast furnace gas 90 may generally be more readily available than the coke oven gas 82. Furthermore, the fired heater 124 may be configured to burn the blast furnace gas 90, despite the lower heating values.

The diverted portion 128 of the fuel gas mixture 66 may be combined with ambient air 130 and combusted within the fired heater 124. In certain embodiments, the pressure of the ambient air 130 may be increased within a compressor 132 upstream of the fired heater 124. High-temperature flue gas 134 from the fired heater 124 may be used for pre-heating the inlet air 70 within the air pre-heater 126, creating the heated inlet air 72 for use within the compressor 20 of the gas turbine 12. In other words, heat from the flue gas 134 from the fired heater 124 may be used as an external waste heat source for increasing the temperature of the inlet air 70 during cold days by, for example, approximately 10° F. The air pre-heater 126 may be any appropriate heat exchanger component for transferring heat from the flue gas 134 to the inlet air 70.

Although described above as heating the inlet air 70 from a cold ambient temperature by approximately 10° F, the amount of heating may depend on the specific design of the gas turbine 12, the fuel gas system 64, the air heating system 68, and so forth, as well as the particular ambient air conditions and other operating conditions. For instance, in certain embodiments, the inlet air 70 may be heated by 5, 10, 15, 20, 25, 30, 35, 40, 45, 50 degrees, or even more, depending on the particular circumstances.

After the heat has been transferred from the flue gas 134 to the inlet air 70, the exhaust flue gas 136 may be combined with the flow of the heated exhaust gas 34 from the turbine 16 of the gas turbine 12. By combining the exhaust flue gas 136 with the heated exhaust gas 34 from the gas turbine 12, the heat within the exhaust flue gas 136 may be recaptured within the HRSG 32. However, this is only one of the possible solutions for recapturing heat within the exhaust flue gas 136. For instance, the exhaust flue gas 136 may be injected into other appropriate locations within the HRSG 32. In addition, in certain embodiments, the exhaust flue gas 136 may be used for heat integration with different feedwater sources of the bottoming cycle (i.e., the steam turbine 22) of the combined cycle power generation system 10. Furthermore, in yet other embodiments, the exhaust flue gas 136 may be used to produce a chilling effect via a vapor absorption chiller, using the cooling load to improve the efficiency of the combined cycle power generation system 10.

Using the fired heater 124 and the air pre-heater 126 to increase the temperature of the inlet air 70 during cold ambient conditions may lead to several benefits. For instance, the overall heat consumption may be maintained relative to the fuel gas system 64 and gas turbine 12 described with respect to FIG. 4. However, the mass flow rate of the fuel gas 66 mixture may decrease since the diverted portion 128 is removed from the fuel gas 66 mixture and used for pre-heating the inlet air 70. The decrease in the mass flow rate of the fuel gas 66 mixture may result in lower power usage by the first and second compressors 110, 112 of the fuel gas system 64. As described above, the temperature of the inlet air 70 may be increased by approximately 10° F. The increase in temperature leads to the heated inlet air 72 having a lower density than the inlet air 70. Thus, the power usage by the compressor 20 of the gas turbine 12 will be reduced. In addition, the higher temperature of the heated inlet air 72 may more readily facilitate combustion within the combustion chamber 18 of the gas turbine 12. Also, since the mass flow rate of the fuel gas 66 mixture is reduced, the amount of overboard bleed air 122 may be substantially reduced and that portion of overboard bleed air may be available for combustion in the gas turbine 12, which may lead to an increase in the power produced by the gas turbine 12. Furthermore, recapturing heat from the exhaust flue gas 136 may result in performance gains within the HRSG 32, the bottoming cycle (i.e., the steam turbine 22), or other components of the combined cycle power generation system 10. All of these benefits may lead to higher net output and efficiency of the combined cycle power generation system 10.

However, using the fired heater 124 and the associated air pre-heater 126 as illustrated in FIG. 5 is merely one technique for utilizing external waste heat sources to increase the temperature of inlet air 70 into the compressor 20 of the gas turbine 12 during colder ambient conditions. In fact, several other external waste heat sources may be used. For instance, in certain embodiments, waste heat from the HRSG 32 or the bottoming cycle (i.e., the steam turbine 22) of the combined cycle power generation system 10 may be recaptured by transferring the heat into the inlet air 70. In these other embodiments, the waste heat may be transferred into the inlet air 70 by means of any suitable heat exchanger components. In addition, other various external waste heat sources, such as electric heaters, may be used.

In each of these embodiments, however, waste heat is transferred only into ambient inlet air 70. In other words, re-circulated exhaust gas is not heated and delivered to the compressor 20 of the gas turbine 12. This is primarily due to the fact that ambient inlet air 70 is generally richer in oxygen than re-circulated exhaust gas. In addition, waste heat from the heated exhaust gas 34 of the gas turbine 12 is not used as a waste heat source since, among other reasons, this type of heating would not result in great enough efficiency increases. Rather, the waste heat sources used to heat the inlet air 70 are external to the gas turbine 12.

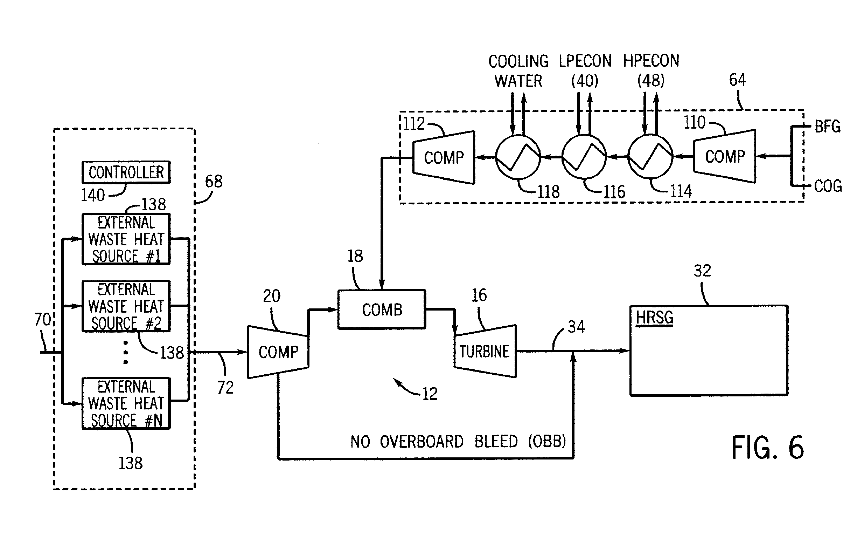

In certain embodiments, multiple external waste heat sources may be used to increase the temperature of the inlet air 70. For instance, FIG. 6 is a schematic flow diagram of an embodiment of the gas turbine 12, the HRSG 32, the fuel gas system 64, and the air heating system 68, illustrating use of multiple external waste heat sources 138 for increasing the temperature of the inlet air 70 into the compressor 20 of the gas turbine 12. For instance, in an embodiment, external waste heat source #1 may include the fired heater 124 and the associated air pre-heater 126 described with respect to FIG. 5, external waste heat source #2 may include waste heat from a component of the HRSG 32, and external waste heat source #N may include waste heat from the bottoming cycle (i.e., the steam turbine 22) of the combined cycle power generation system 10.

Whether the air heating system 68 includes a single external waste heat source or multiple external waste heat sources, a controller 140 may be used to control the amount of waste heat transferred into the inlet air 70. For instance, in embodiments where multiple external waste heat sources are used, the controller 140 may be configured to determine a priority with which the external waste heat sources may be utilized. In addition, the controller 140 may be configured to control the heating of the inlet air 70 based on atmospheric conditions.

In certain embodiments, an aspect of the controller 140 may be to ensure that a substantially constant temperature of the heated inlet air 72 is maintained. In other words, the temperature of the heated inlet air 72 may be maintained within a temperature range which varies only be a very small amount (e.g., 0.5, 1, 2, 3, 4, or 5 degrees). By doing so, the operation of the gas turbine 12, as well as the fuel gas system 64 and other associated equipment, may be held substantially constant, regardless of ambient conditions. In other embodiments, the controller 140 may control the heating of the inlet air 70 based on other parameters, such as the temperature of the air exiting the compressor 20 of the gas turbine 12, for example.

In certain embodiments, the controller 140 may include a memory, such as any suitable type of non-volatile memory, volatile memory, or combination thereof. The memory may include code/logic for performing any of the control functions described herein. Furthermore, the code/logic may be implemented in hardware, software (such as code stored on a tangible machine-readable medium), or a combination thereof.

Technical effects of the invention include heating inlet air 70 into the compressor 20 of the gas turbine 12 using external waste heat sources. For instance, as described above with respect to FIG. 5, a fired heater 124 and associated air pre-heater 126 may be used to increase the temperature of the inlet air 70. In particular, a portion 128 of the fuel gas 66 mixture may be combusted within the fired heater 124 and the generated heat may be used by the air pre-heater 126 to increase the temperature of the inlet air 70, creating the heated inlet air 72. However, as described above, multiple other sources of external waste heat may also be used. One aspect of the present invention is to substantially reduce the overboard bleed air 122 from the compressor 20 of the gas turbine 12 during cold ambient conditions. By doing so, the overall efficiency of the gas turbine 12, as well as the combined cycle power generation system 10 within which it may operate, may be increased.

In each of the embodiments described herein, only ambient inlet air 70 is heated by external waste heat sources and delivered to the compressor 20 of the gas turbine 12. In other words, exhaust gases from processes of the combined cycle power generation system 10 are not heated by the external waste heat sources. By limiting the application of the external waste heat sources to ambient inlet air 70 only, the oxygen content delivered to the combustion chamber 18 of the gas turbine 12 may be maximized, allowing for more stable combustion.

The disclosed embodiments may be beneficial in that they may be employed in existing gas turbines 12 operating under cold ambient conditions with only minor modifications to an inlet system of the gas turbine 12. For instance, an air heating system 68 may be sold either integrated with the gas turbine 12 or as a stand-alone retrofit package for customers desiring higher efficiency and output from an existing gas turbine 12 at site locations with average ambient temperatures lower than the ISO standard day (59° F). In addition, the disclosed embodiments may be implemented in not only combined cycle power generation systems, but also in simple gas turbine applications, or any other applications that may use overboard bleeding. Furthermore, as described above, excess external waste heat may be used to increase the inlet temperature of the exhaust gas 34 into the HRSG 32 which may, in turn, increase the efficiency of the HRSG 32 and the bottoming cycle (i.e., the steam turbine 22).

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects of the present invention are defined by the following numbered clauses:
1. A system, comprising:
   a turbine engine; and
   an air heating system coupled to an air inlet of the turbine engine, wherein the air heating system is configured to heat air delivered to the air inlet with waste heat generated by a waste heat source external to the turbine engine.
2. The system of clause 1, wherein the air heating system is configured to heat the air with waste heat from a fired heater.
3. The system of clause 1 or clause 2, wherein the waste heat from the fired heater is generated by using a gas mixture of blast furnace gas and coke oven gas.
4. The system of any one of the preceding clauses, wherein the air heating system is configured to heat the air with waste heat from a heat recovery steam generation system.
5. The system of any one of the preceding clauses, wherein the air heating system is configured to heat the air with waste heat from a bottoming cycle of a combined cycle power generation system.
6. The system of any one of the preceding clauses, wherein the air which is heated does not contain exhaust gas from the turbine engine.
7. The system of any one of the preceding clauses, wherein the air heating system is configured to heat the air with waste heat from a plurality of waste heat sources external to the turbine engine.
8. The system of any one of the preceding clauses, comprising a controller configured to control the heating of the air based on atmospheric conditions.
9. A system, comprising:
   an air heating system configured to:
      heat air with waste heat generated by a waste heat source external to a turbine engine; and
      deliver the heated air to a compressor of the turbine engine.
10. The system of clause 9, wherein the waste heat comprises heat from a fired heater.
11. The system of clauses 10, wherein the fired heater is fueled by a gas mixture of blast furnace gas and coke oven gas.
12. The system of any one of clauses 9 to 11, wherein the waste heat comprises heat from a heat recovery steam generation system.
13. The system of any one of clauses 9 to 12, wherein the waste heat comprises heat from a bottoming cycle of a combined cycle power generation system.
14. The system of any of clauses 9 to 13, wherein the air heating system is configured to heat air with multiple waste heat sources.
15. The system of any one of clauses 9 to 14, wherein the air heating system is configured to control the heating of the air based on atmospheric conditions.
16. The system of any one of clauses 9 to 15, wherein the air heating system is configured to control the heating of the air to provide a substantially constant temperature of the heated air delivered to the compressor of the gas turbine.
17. A method, comprising:
   heating air with waste heat generated by a waste heat source external to a turbine engine; and
   delivering the heated air to a compressor of the turbine engine.
18. The method of clause 17, comprising heating air with multiple waste heat sources.
19. The method of clause 17 or clause 18, comprising controlling the heating of the air based on atmospheric conditions.
20. The method of any one of clauses 17 to 19, comprising controlling the heating of the air to provide a substantially constant temperature of the heated air delivered to the compressor of the turbine engine.

## Claims

1. A system, comprising:
a turbine engine (12); and
an air heating system (68) coupled to an air inlet of the turbine engine (12), wherein the air heating system (68) is configured to heat air (72) delivered to the air inlet with waste heat generated by a waste heat source (22, 32, 124, 126, 138) external to the turbine engine (12).

2. The system of claim 1, wherein the air heating system (68) is configured to heat the air (72) with waste heat from a fired heater (124).

3. The system of claim 2, wherein the waste heat from the fired heater (124) is generated by using a gas mixture of blast furnace gas (90) and coke oven gas (82).

4. The system of any one of the preceding claims, wherein the air heating system (68) is configured to heat the air (72) with waste heat from a heat recovery steam generation system (32).

5. The system of any one of the preceding claims, wherein the air heating system (68) is configured to heat the air (72) with waste heat from a bottoming cycle (22) of a combined cycle power generation system (10).

6. The system of any one of the preceding claims, wherein the air (72) which is heated does not contain exhaust gas (34) from the turbine engine (12).

7. The system of any one of the preceding claims, wherein the air heating system (68) is configured to heat the air (72) with waste heat from a plurality of waste heat sources (22, 32, 124, 126, 138) external to the turbine engine (12).

8. The system of any one of the preceding claims, comprising a controller (140) configured to control the heating of the air (72) based on atmospheric conditions.

9. A system, comprising:
an air heating system configured to:
heat air with waste heat generated by a waste heat source external to a turbine engine; and
deliver the heated air to a compressor of the turbine engine.

10. The system of claim 9, wherein the waste heat comprises heat from a fired heater.

11. The system of claim 9 or claim 10, wherein the fired heater is fueled by a gas mixture of blast furnace gas and coke oven gas.

12. A method, comprising:
heating air (72) with waste heat generated by a waste heat source (22, 32, 124, 126, 138) external to a turbine engine (12); and
delivering the heated air to a compressor (20) of the turbine engine (12).

13. The method of claim 12, comprising heating air (72) with multiple waste heat sources (22, 32, 124, 126, 138).

14. The method of claim 12 or claim 13, comprising controlling the heating of the air based on atmospheric conditions.

15. The method of any one of claims 12 to 14, comprising controlling the heating of the air to provide a substantially constant temperature of the heated air delivered to the compressor of the turbine engine.
